# EUROPÄISCHE PATENTANMELDUNG

(11) **EP 2 416 206 A1**
(43) Veröffentlichungstag der Anmeldung: **08.02.2012**
(21) Anmeldenummer: 10171873.2
(22) Anmeldetag: 04.08.2010
(51) Int. Cl.: G02F 1/01, G01B 9/02

(54) **Schaltbares Interferometer**

(71) Anmelder: Bayer MaterialScience AG, 51368 Leverkusen (DE)
(72) Erfinder: Die Erfindernennung liegt noch nicht vor

(57) **Zusammenfassung**

Die vorliegende Erfindung betrifft ein schaltbares Interferometer, insbesondere ein Mach-Zehnder-Interferometer. Sie betrifft weiterhin ein Verfahren zum Betreiben eines solchen Interferometers sowie die Verwendung desselben. Im erfindungsgemäßen Interferometer ist in den Strahlengang wenigstens eines Teilstrahles ein optisches Element (1) eingebracht, durch welches ein Teilstrahl läuft. Das optische Element (1) umfasst wenigstens ein dielektrisches Elastomer (2) sowie zwei an gegenüberliegenden Seiten des dielektrischen Elastomeren (2) angeordnete Elektroden (3, 4). Die optische Weglänge des durch das optische Element (1) verlaufenden Teilstrahles ist durch Anlegen einer elektrischen Spannung an die Elektroden (3, 4) veränderbar.

## Beschreibung

Die vorliegende Erfindung betrifft ein schaltbares Interferometer, insbesondere ein Mach-Zehnder-Interferometer. Sie betrifft weiterhin ein Verfahren zum Betreiben eines solchen Interferometers sowie die Verwendung desselben.

Interferometer sind Vorrichtungen zur Bestimmung von Interferenzen zur Präzisionsmessung von Längen, Brechzahlen, Winkeln sowie zum Einsatz in der Spektroskopie.

Es sind unterschiedliche Bautypen von Interferometern bekannt, welche sich jedoch in ihrer grundlegenden Funktionsweise ähneln. Wenigstens zwei Lichtstrahlen werden mit Hilfe von Strahlteilern, welche durch Spiegel beziehungsweise halbdurchlässige Spiegel, auf getrennte optische Bahnen geführt und wiederum mittels Spiegeln am Ende dieser reflektiert. Die reflektierten Lichtstrahlen werden dann wieder zusammengeführt, wobei sich durch die unterschiedlichen Weglängen auf den getrennten optischen Bahnen Interferenzmuster ergeben. Die Art und Lage der Interferenzmuster geben Aufschluss über die Interferenzen beziehungsweise die die Interferenzen hervorrufenden Faktoren.

Ein Typ eines Interferometers ist das sogenannte Mach-Zehnder-Interferometer, welches zu den der Klasse der Zweistrahlinterferometer gehört. Es basiert auf dem Funktionsprinzip, das ein aus einer geeigneten Lichtquelle kommender kohärenter Lichtstrahl durch einen teildurchlässigen Spiegel in zwei Teilstrahlen aufgespalten wird. Diese Teilstrahlen durchlaufen unterschiedliche Wegstrecken, werden durch Spiegel abgelenkt und an einem weiteren teildurchlässigen Spiegel wieder zusammengeführt, wodurch sie sich überlagern. Durch die Überlagerung der Lichtwellen entsteht ein Interferenzbild.

Ändert sich nun für einen der Teilstrahlen die optische Weglänge, welche das Produkt aus der Brechzahl des Mediums, in dem sich der Lichtstrahl bewegt und der geometrischen Weglänge ist, erfährt dieser Teilstrahl eine Phasenverschiebung gegenüber dem ungestörten Teilstrahl. Daraus resultiert eine Änderung des Interferenzbildes der sich überlagernden Teilstrahlen nach deren Zusammenführung, aus welcher Rückschlüsse auf die Änderung der optischen Weglänge gezogen werden können.

Schaltbare optische Strukturen sind für vielfältige Anwendungen interessant. Ein Weg zur Realisierung eines Schaltvorgangs verläuft über die Änderung des Brechungsindexes. So offenbart beispielsweise US 2007/274637 eine optische Vorrichtung, bei welcher ein optischer Wellenleiter auf einem dielektrischen Material geformt ist und die optische Vorrichtung einen Eingangsteil und einen Ausgangsteil aufweist, an welchen der optische Wellenleiter mit optischen Fasern verbunden ist. Es wird eine Druckschicht für zumindest der Eingangs- und Ausgangsteile bereitgestellt. Die Druckschicht übt in der Weise Druck auf den optischen Wellenleiter aus, dass sich der Refraktionsindex des optischen Wellenleiters reduziert.

Nachteilig an den aus dem Stand der Technik bekannten Lösungen ist insbesondere ihr vergleichsweise komplizierter Aufbau sowie ein zu geringer Einstellbereich.

Der Erfindung liegt daher die Aufgabe zugrunde, den Aufbau von Interferometeranordnungen zu vereinfachen und gleichzeitig den Einstellbereich des Interferometers zu vergrößern.

Erfindungsgemäß gelöst wird die Aufgabe durch ein Interferometer, wobei ein aus einer geeigneten Quelle stammender elektromagnetischer Strahl mittels eines ersten Strahlteilers in wenigstens zwei Teilstrahlen aufgeteilt wird und die erhaltenen Teilstrahlen auf getrennten Wegen zu einem zweiten Strahlteiler geführt werden, an welchem sie wieder vereint werden.

Das Interferometer zeichnet sich dadurch aus, dass in den Strahlengang wenigstens eines Teilstrahles ein optisches Element eingebracht ist, durch welches der Teilstrahl läuft, wobei das optische Element wenigstens ein dielektrisches Elastomer sowie zwei an gegenüberliegenden Seiten des dielektrischen Elastomeren angeordnete Elektroden umfasst und wobei die optische Weglänge des durch das optische Element verlaufenden Teilstrahles durch Anlegen einer elektrischen Spannung an die Elektroden veränderbar ist.

Solch ein Interferometer ist insbesondere ein Mach-Zehnder-Interferometer.

Eine Klasse von Aktoren sind elektroaktive Polymere, wie sie unter anderem in WO 2001/06575 A1 erwähnt werden. Diese Patentanmeldung offenbart einen Energieumwandler, seine Verwendung sowie seine Herstellung. Der Energieumwandler wandelt mechanische Energie in elektrische Energie um. Einige der gezeigten Energieumwandler weisen vorgespannte Polymere auf. Die Vorspannung verbessert die Umwandlung zwischen elektrischer und mechanischer Energie. Darüber hinaus wird eine Vorrichtung offenbart, welche ein elektroaktives Polymer zur Umwandlung von elektrischer Energie in mechanische Energie umfasst. Des Weiteren werden Elektroden offenbart, welche an die Form des Polymers in dem Energieumwandler angepasst sind. Auch werden Verfahren zur Herstellung einer elektromechanischen Vorrichtung offenbart, welche ein oder mehrere elektroaktive Polymere umfasst.

Eine geeignete Quelle für einen elektromagnetischen Strahl kann ein Laser sein. Als Strahlteiler kommt beispielsweise ein teildurchlässiger Spiegel in Frage.

Die Elektroden sind zweckmäßigerweise elastisch, so dass sie der Bewegung des dielektrischen Elastomers folgen können. Zusätzlich oder auch alternativ können Elektroden mit einem Wellenprofil eingesetzt werden. Aber auch inelastische Elektroden sind prinzipiell einsetzbar.

Beim Anlegen einer Spannung an das dielektrische Elastomer verändert dieses seine Dicke. Abhängig vom Material kann es auch zu einer Änderung des Brechungsindexes des Elastomers kommen. Im Ergebnis wird die optische Weglänge für den durch das Elastomer passierenden Teilstrahl verändert. Nach einer Kombination der beiden Teilstrahlen können dann Interferenzerscheinungen auftreten. Auf diese Weise lassen sich Interferometer konstruieren, bei denen durch das eingesetzte optische Element über weite Bereiche und ohne bewegliche mechanische Teile ein Teilstrahl beeinflusst werden kann. Dieses ist vor allem ein Vorteil gegenüber Aktorsystemen, die auf piezoelektrischen Keramiken basieren.

Ausführungsformen der Erfindung werden nachfolgend geschildert, wobei die einzelnen Ausführungsformen in beliebiger Weise miteinander kombiniert werden können.

Allgemein gesprochen kann das erfindungsgemäße Interferometer beispielsweise die folgenden Komponenten umfassen:
eine Lichtquelle, vorzugsweise für kohärentes Licht;
einen ersten Strahlteiler, der angeordnet ist, dass ein Lichtstrahl aus der Lichtquelle beim Durchgang durch den ersten Strahlteiler in einen ersten und einen zweiten Teilstrahl aufgespalten wird;
einen im Strahlengang des ersten Teilstrahls angeordnetes, wie zuvor beschriebenes, optisches Element;
einen im Strahlengang des ersten Teilstrahls und nach dem optischen Element angeordneten ersten Spiegel, der so angeordnet ist, dass der erste Teilstrahl auf einen zweiten Strahlteiler gelenkt wird;
einen im Strahlengang des zweiten Teilstrahls nach dem ersten Strahlteiler angeordneten Spiegel, der so angeordnet ist, dass der zweite Teilstrahl auf den zweiten Strahlteiler gelenkt wird; und
wobei der zweite Strahlteiler so angeordnet ist, dass der erste und der zweite Teilstrahl zur Interferenz miteinander befähigt sind.

In einer Ausführungsform des erfindungsgemäßen Interferometers ist das Elastomer ausgewählt aus der Gruppe umfassend Polyurethan-Elastomere, Silikon-Elastomere und/oder Acrylat-Elastomere. Bevorzugt sind hierbei Polyurethan-Elastomere. Diese können durch Umsetzung eines Polyisocyanats A) und/oder eines Polyisocyanat-Prepolymers B) mit mindestens einer difunktionellen, gegenüber Isocyanatgruppen reaktiven Verbindung C) in Anwesenheit eines in der Polyurethanchemie üblichen Katalysators D) hergestellt werden.

Als Polyisocyanat A) eignen sich beispielsweise 1,4-Butylendiisocyanat, 1,6-Hexamethylendiisocyanat (HDI), Isophorondiisocyanat (IPDI), 2,2,4 und/oder 2,4,4-Trimethylhexamethylendiisocyanat, die isomeren Bis-(4,4'-isocyanatocyclohexyl)methane oder deren Mischungen beliebigen Isomerengehalts, 1,4-Cyclohexylendiisocyanat, 4-Isocyanatomethyl-1,8-octandiisocyanat (Nonantriisocyanat), 1, 4-Phenylendiisocyanat, 2,4- und/oder 2,6-Toluylendiisocyanat, 1,5-Naphthylendiisocyanat, 2,2'- und/oder 2,4'- und/oder 4,4'-Diphenylmethandiisocyanat, 1,3- und/oder 1,4-Bis-(2-isocyanato-prop-2-yl)-benzol (TMXDI), 1,3-Bis(isocyanatomethyl)benzol (XDI), Alkyl-2,6-diisocyanatohexanoate (Lysindiisocyanate) mit Alkylgruppen mit 1 bis 8 Kohlenstoffatomen sowie Mischungen davon. Weiterhin sind Uretdion-, Isocyanurat-, Biuret-, Iminooxadiazindion- oder Oxadiazintrionstruktur enthaltende Verbindungen basierend auf den genannten Diisocyanaten geeignete Bausteine der Komponente A).

Vorzugsweise kann die Komponente A) ein Polyisocyanat oder ein Polyisocyanatgemisch mit einer mittleren NCO-Funktionalität von 2 bis 4 mit ausschließlich aliphatisch oder cycloaliphatisch gebundenen Isocyanatgruppen sein. Bevorzugt handelt es sich um Polyisocyanate oder Polyisocyanatgemische der vorstehend genannten Art mit Uretdion-, Isocyanurat-, Biuret-, Iminooxadiazindion- oder Oxadiazintrionstruktur sowie Mischungen daraus und einer mittleren NCO-Funktionalität der Mischung von 2 bis 4, bevorzugt von 2 bis 2,6 und besonders bevorzugt von 2 bis 2,4.

Die als Komponente B) einsetzbaren Polyisocyanat-Prepolymere können durch Umsetzung von einem oder mehreren Diisocyanaten mit einem oder mehreren hydroxyfunktionellen, insbesondere polymeren, Polyolen gegebenenfalls unter Zusatz von Katalysatoren sowie Hilfs- und Zusatzstoffen erhalten werden. Des Weiteren können zusätzlich Komponenten zur Kettenverlängerung, wie beispielsweise mit primären und/oder sekundären Aminogruppen (NH₂- und/oder NH-funktionelle Komponenten) für die Bildung des Polyisocyanat-Prepolymers eingesetzt werden.

Das Polyisocyanat-Prepolymer als Komponente B) kann bevorzugt aus der Umsetzung von polymeren Polyolen und aliphatischen Diisocyanaten erhältlich sein. Hydroxyfunktionelle, polymere Polyole für die Umsetzung zum Polyisocyanat-Prepolymer B) können beispielsweise Polyesterpolyole, Polyacrylatpolyole, Polyurethanpolyole, Polycarbonatpolyole, Polyetherpolyole, Polyesterpolyacrylatpolyole, Polyurethanpolyacrylatpolyole, Polyurethanpolyesterpolyole, Polyurethanpolyetherpolyole, Polyurethanpolycarbonatpolyole und/oder Polyesterpolycarbonatpolyole sein. Diese können zur Herstellung des Polyisocyanat-Prepolymers einzeln oder in beliebigen Mischungen untereinander eingesetzt werden.

Geeignete Polyesterpolyole zur Herstellung der Polyisocyanat-Prepolymere B) können Polykondensate aus Di- sowie gegebenenfalls Tri- und Tetraolen und Di- sowie gegebenenfalls Tri- und Tetracarbonsäuren oder Hydroxycarbonsäuren oder Lactonen sein. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind dabei Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester oder Mischungen davon, wobei Hexandiol(1,6) und Isomere, Butandiol(1,4), Neopentylglykol und Hydroxypivalinsäureneopentylglykolester bevorzugt sind. Daneben können auch Polyole wie Trimethylolpropan, Glycerin, Erythrit, Pentaerythrit, Trimethylolbenzol oder Trishydroxyethylisocyanurat oder Mischungen davon eingesetzt werden.

Als Dicarbonsäuren können dabei Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure und/oder 2,2-Dimethylbernsteinsäure eingesetzt werden. Als Säurequelle können auch die entsprechenden Anhydride verwendet werden.

Sofern die mittlere Funktionalität des zu veresternden Polyols ≥ 2 ist, können zusätzlich auch Monocarbonsäuren, wie Benzoesäure und Hexancarbonsäure mit verwendet werden.

Bevorzugte Säuren sind aliphatische oder aromatische Säuren der vorstehend genannten Art. Besonders bevorzugt sind dabei Adipinsäure, Isophthalsäure und Phthalsäure.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure oder Hydroxystearinsäure oder Mischungen davon. Geeignete Lactone sind Caprolacton, Butyrolacton oder Homologe oder Mischungen davon. Bevorzugt ist dabei Caprolacton.

Ebenfalls können zur Herstellung der Polyisocyanat-Prepolymere B) Hydroxylgruppen aufweisende Polycarbonate, beispielsweise Polycarbonatpolyole, bevorzugt Polycarbonatdiole, eingesetzt werden. Beispielsweise können diese ein zahlenmittleres Molekulargewicht Mₙ von 400 g/mol bis 8000 g/mol, bevorzugt von 600 g/mol bis 3000 g/mol haben. Diese können durch Reaktion von Kohlensäurederivaten, wie Diphenylcarbonat, Dimethylcarbonat oder Phosgen, mit Polyolen, bevorzugt Diolen, erhalten werden.

Beispiele hierfür geeigneter Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A oder lactornnodifizierte Diole der vorstehend genannten Art oder Mischungen davon.

Bevorzugt enthält dann die Diolkomponente dabei von 40 Gewichtsprozent bis 100 Gewichtsprozent Hexandiol, vorzugsweise 1,6-Hexandiol und/oder Hexandiolderivate. Solche Hexandiolderivate basieren auf Hexandiol und können neben endständigen OH-Gruppen Ester- oder Ethergruppen aufweisen. Derartige Derivate sind beispielsweise durch Reaktion von Hexandiol mit überschüssigem Caprolacton oder durch Veretherung von Hexandiol mit sich selbst zum Di- oder Trihexylenglykol erhältlich. Die Menge dieser und anderer Komponenten werden derart gewählt, dass die Summe 100 Gewichtsprozent nicht überschreitet, insbesondere 100 Gewichtsprozent ergibt.

Hydroxylgruppen aufweisende Polycarbonate, insbesondere Polycarbonatpolyole, sind bevorzugt linear gebaut.

Ebenfalls können zur Herstellung der Polyisocyanat-Prepolymere B) Polyetherpolyole eingesetzt werden. Beispielsweise eignen sich Polytetramethylenglykolpolyether wie sie durch Polymerisation von Tetrahydrofuran mittels kationischer Ringöffnung erhältlich sind. Ebenfalls geeignete Polyetherpolyole können die Additionsprodukte von Styroloxid, Ethylenoxid, Propylenoxid, Butylenoxid und/oder Epichlorhydrin an di- oder polyfunktionelle Startermoleküle sein. Als geeignete Startermoleküle können beispielsweise Wasser, Butyldiglykol, Glycerin, Diethylenglykol, Trimethyolpropan, Propylenglykol, Sorbit, Ethylendiamin, Triethanolamin, oder 1,4-Butandiol oder Mischungen davon eingesetzt werden.

Bevorzugte Komponenten zur Herstellung der Polyisocyanat-Prepolymere B) sind Polypropylenglykol, Polytetramethylenglykolpolyether und Polycarbonatpolyole beziehungsweise deren Mischungen, wobei Polypropylenglykol besonders bevorzugt ist.

Dabei können polymere Polyole mit einem zahlenmittleren Molekulargewicht Mₙ von 400 g/mol bis 8000 g/mol, bevorzugt von 400 g/mol bis 6000 g/mol und besonders bevorzugt von 600 g/mol bis 3000 g/mol eingesetzt werden. Diese weisen bevorzugt eine OH-Funktionalität von 1,5 bis 6, besonders bevorzugt von 1,8 bis 3, ganz besonders bevorzugt von 1,9 bis 2,1 auf.

Neben den genannten polymeren Polyolen können auch kurzkettige Polyole bei der Herstellung der Polyisocyanat-Prepolymere B) eingesetzt werden. Beispielsweise kann Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Neopentylglykol, Hydrochinondihydroxyethylether, Bisphenol A (2,2-Bis(4-hydroxyphenyl)propan), hydriertes Bisphenol A (2,2-Bis(4-hydroxycyclohexyl)propan), Trimethylolpropan, Trimethylolethan, Glycerin oder Pentaerythrit oder eine Mischung davon eingesetzt werden.

Geeignet sind auch Esterdiole des genannten Molekulargewichtsbereichs wie α-Hydroxybutyl-ε-hydroxy-capronsäureester, ω-Hydroxyhexyl-γ-hydroxybuttersäureester, Adipinsäure-(β-hydroxyethyl)ester oder Terephthalsäurebis(β-hydroxyethyl)ester.

Ferner können zur Herstellung der Polyisocyanat-Prepolymere B) auch monofunktionelle isocyanatreaktive hydroxylgruppenhaltige Verbindungen eingesetzt werden. Beispiele solcher monofunktionellen Verbindungen sind Ethanol, n-Butanol, Ethylenglykolmonobutylether, Diethylenglykolmonomethylether, Diethylenglykolmonobutylether, Propylenglykolmonomethylether, Dipropylenglykol-monomethylether, Tripropylenglykolmonomethylether, Dipropylenglykolmonopropylether, Propylenglykolmonobutylether, Dipropylenglykolmonobutylether, Tripropylenglykolmonobutylether, 2-Ethylhexanol, 1-Octanol, 1-Dodecanol oder 1-Hexadecanol oder Mischungen davon.

Zur Herstellung der Polyisocyanat-Prepolymere B) können vorzugsweise Diisocyanate mit den Polyolen bei einem Verhältnis der Isocyanatgruppen zu Hydroxylgruppen (NCO/OH-Verhältnis) von 2:1 bis 20:1, beispielsweise von 8:1, umgesetzt werden. Dabei können Urethan- und/oder Allophanatstrukturen gebildet werden. Ein Anteil an nicht umgesetzten Polyisocyanaten kann anschließend abgetrennt werden. Hierfür kann beispielsweise eine Dünnschichtdestillation verwendet werden, wobei restmonomerenarme Produkte mit Restmonomergehalten von beispielsweise ≤ 1 Gewichtsprozent, bevorzugt ≤ 0,5 Gewichtsprozent, besonders bevorzugt ≤ 0,1 Gewichtsprozent, erhalten werden. Die Reaktionstemperatur kann dabei von 20 °C bis 120 °C, bevorzugt von 60 °C bis 100 °C, betragen. Gegebenenfalls können während der Herstellung Stabilisatoren wie Benzoylchlorid, Isophthaloylchlorid, Dibutylphosphat, 3-Chlorpropionsäure oder Methyltosylat zugesetzt werden.

Weiterhin können NH₂- und/oder NH-funktionelle Komponenten zusätzlich zur Kettenverlängerung bei der Herstellung der Polyisocyanat-Prepolymere B) eingesetzt werden.

Geeignete Komponenten zur Kettenverlängerung sind organische Di- oder Polyamine. Beispielsweise können Ethylendiamin, 1,2- Diaminopropan, 1,3-Diaminopropan, 1,4-Diaminobutan, 1,6-Diaminohexan, Isophorondiamin, Isomerengemische von 2,2,4- und 2,4,4-Trimethylhexamethylendiamin, 2-Methylpentamethylendiamin, Diethylentriamin, Diaminodicyclohexylmethan oder Dimethylethylendiamin oder Mischungen davon eingesetzt werden.

Darüber hinaus können auch Verbindungen, die neben einer primären Aminogruppe auch sekundäre Aminogruppen oder neben einer Aminogruppe (primär oder sekundär) auch OH-Gruppen aufweisen, zur Herstellung der Polyisocyanat-Prepolymere B) eingesetzt werden. Beispiele hierfür sind primäre/sekundäre Amine, wie Diethanolamin, 3-Amino-1-methylaminopropan, 3-Amino-1-ethylaminopropan, 3-Amino-1-cyclohexylaminopropan, 3-Amino-1-methylaminobutan, Alkanolamine wie N-Aminoethylethanolamin, Ethanolamin, 3-Aminopropanol, Neopentanolamin. Zur Kettenterminierung werden üblicherweise Amine mit einer gegenüber Isocyanaten reaktiven Gruppe wie Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, beziehungsweise geeignete substituierte Derivate davon, Amidamine aus diprimären Aminen und Monocarbonsäuren, Monoketimine von diprimären Aminen, primär/tertiäre Amine, wie N,N-Dimethylaminopropylamin, verwendet.

Die als Komponente B) eingesetzten Polyisocyanat-Prepolymere oder deren Mischungen können bevorzugt eine mittlere NCO-Funktionalität von 1,8 bis 5, besonders bevorzugt 2 bis 3,5 und ganz besonders bevorzugt 2 bis 3 aufweisen.

Die Komponente C) ist eine Verbindung mit mindestens zwei isocyanatreaktiven funktionellen Gruppen. Beispielsweise kann Komponente C) ein Polyamin oder ein Polyol mit mindestens zwei isocyanatreaktiven Hydroxygruppen sein.

Als Komponente C) können hydroxyfunktionelle, insbesondere polymere, Polyole, beispielsweise Polyetherpolyole oder Polyesterpolyole eingesetzt werden. Geeignete Polyole wurden bereits vorstehend im Zusammenhang mit der Herstellung des Prepolymers B) geschildert, so dass zur Vermeidung von Wiederholungen hierauf Bezug genommen wird.

Es ist bevorzugt, dass die Komponente C) ein Polymer mit 2 bis 4 Hydroxygruppen pro Molekül, ganz besonders bevorzugt ein Polypropylenglykol mit 2 bis 3 Hydroxygruppen pro Molekül ist.

Es ist günstig, wenn die polymeren Polyole C) eine besonders enge Molekulargewichtsverteilung, das heißt eine Polydispersität (PD = Mw/Mn) von 1,0 bis 1,5 aufweisen. Bevorzugt weisen beispielsweise Polyetherpolyole eine Polydispersität von 1,0 bis 1,5 und eine OH-Funktionalität von größer 1,9 auf, und besonders bevorzugt größer oder gleich 1,95 auf.

Solche Polyetherpolyole sind in an sich bekannter Weise durch Alkoxylierung von geeigneten Starter-Molekülen, insbesondere unter Verwendung von Doppelmetallcyanid-Katalysatoren (DMC-Katalyse) herstellbar. Diese Methode ist zum Beispiel in der Patentschrift US 5,158,922 und der Offenlegungsschrift EP 0 654 302 A1 beschrieben.

Die Reaktionsmischung für das Polyurethan kann durch Mischen der Komponenten A) und/oder B) und C) erhalten werden. Das Verhältnis von isocyanatreaktiven Hydroxygruppen zu freien Isocyanatgruppen ist dabei vorzugsweise von 1:1,5 bis 1,5:1 besonders bevorzugt von 1:1,02 bis 1:0,95.

Vorzugsweise besitzt zumindest eine der Komponenten A), B) oder C) eine Funktionalität von ≥ 2,0, bevorzugt von ≥ 2,5 bevorzugt von ≥ 3,0, um in das Polymerelement eine Verzweigung oder eine Vernetzung einzuführen. Der Begriff "Funktionalität" bezieht sich bei Komponente A) und B) auf die mittlere Anzahl von NCO-Gruppen pro Molekül und bei Komponente C) auf die mittlere Anzahl von OH-, NH- oder NH₂- Gruppen pro Molekül. Diese Verzweigung beziehungsweise Vernetzung bewirkt bessere mechanische Eigenschaften und bessere elastomere Eigenschaften, insbesondere auch bessere Dehnungseigenschaften.

Das erhaltene Polyurethanpolymer kann vorzugsweise eine maximale Spannung von ≥ 0,2 MPa, insbesondere von 0,4 MPa bis 50 MPa, und eine maximale Dehnung von ≥ 100 %, insbesondere von ≥ 120 %, aufweisen. Darüber hinaus kann das Polyurethan im Dehnungsbereich von 50 % bis 200 % eine Spannung von 0,1 MPa bis 1 MPa, beispielsweise von 0,1 MPa bis 0,8MPa, insbesondere von 0,1 MPa bis 0,3 MPa, aufweisen (Bestimmung nach ASTM D 412). Ferner kann das Polyurethan ein Elastizitätsmodul bei einer Dehnung von 100 % von 0,1 MPa bis 10 MPa, beispielsweise von 1 MPa bis 8 MPa, aufweisen (Bestimmung nach ASTM D 412).

Vorzugsweise ist das erhaltene Polyurethanpolymer ein dielektrisches Elastomer mit einem spezifischen elektrischen Volumenwiderstand gemäß ASTM D 257 von ≥ 10¹² bis ≤ 10¹⁷ Ohm cm. Es ist weiterhin möglich, dass das Polyurethanpolymer eine Dielektrizitätskonstante gemäß ASTM 150-98 von ≥ 5 bis ≤ 10 und eine dielektrische Durchbruchsfeldstärke gemäß ASTM 149-97a von ≥ 100 V/µm bis ≤ 200 V/µm aufweist. Grundsätzlich wird eine maximale Dielektrizitätskonstante angestrebt, um die Gebrauchsfähigkeit des Polymers zu optimieren.

Die Reaktionsmischung zur Herstellung des Polyurethans kann neben den Komponenten A), B), C) und D) zusätzlich auch Hilfs- und Zusatzstoffe enthalten. Beispiele für solche Hilfs- und Zusatzstoffe sind Vernetzer, Verdicker, Lösemittel, Thixotropiermittel, Stabilisatoren, Antioxidantien, Lichtschutzmittel, Emulgatoren, Tenside, Klebstoffe, Weichmacher, Hydrophobierungsmittel, Pigmente, Füllstoffe und Verlaufshilfsmittel. Bevorzugte Lösungsmittel sind Methoxypropylacetat und Ethoxypropylacetat. Bevorzugte Verlaufshilfsmittel sind Polyacrylate, insbesondere aminharzmodifizierte Acrylcopolymerisate.

Füllstoffe können beispielsweise die Dielektrizitätskonstante des Polymerelements regulieren. Vorzugsweise umfasst die Reaktionsmischung Füllstoffe zur Erhöhung der Dielektrizitätskonstanten wie Füllstoffe mit einer hohen Dielektrizitätskonstante. Beispiele hierfür sind keramische Füllstoffe, insbesondere Bariumtitanat, Titandioxid und piezoelektrische Keramiken wie Quarz oder Bleizirkoniumtitanat, sowie organische Füllstoffe, insbesondere solche mit einer hohen elektrischen Polarisierbarkeit, beispielsweise Phthalocyanine.

Außerdem ist eine hohe Dielektrizitätskonstante auch durch das Einbringen elektrisch leitfähiger Füllstoffe unterhalb der Perkolationsschwelle erzielbar. Beispiele hierfür sind Ruß, Graphit, einwandige oder mehrwandige Kohlenstoff-Nanoröhrchen, elektrisch leitfähige Polymere wie Polythiophene, Polyaniline oder Polypyrrole, oder Mischungen davon. In diesem Zusammenhang sind insbesondere solche Rußtypen von Interesse, die eine Oberflächenpassivierung aufweisen und deshalb bei niedrigen Konzentrationen unterhalb der Perkolationsschwelle zwar die Dielektrizitätskonstante erhöhen und trotzdem nicht zu einer Erhöhung der Leitfähigkeit des Polymers führen.

Hinsichtlich der Füllstoffe versteht es sich, dass darauf zu achten ist, dass sie nicht die optischen Eigenschaften des Elastomers bis hin zur Unbrauchbarkeit beeinträchtigen.

Angemerkt sei, dass die Begriffe "ein" und "eine" im Zusammenhang mit der vorliegenden Erfindung und insbesondere mit den Komponenten A), B) und C) nicht als Zahlwörter, sondern als unbestimmter Artikel verwendet werden, sofern der Kontext nicht eindeutig eine andere Aussage ergibt.

In einer weiteren Ausführungsform des erfindungsgemäßen Interferometers ist das Material der Elektroden ausgewählt aus der Gruppe umfassend Metalle, Metalllegierungen, leitfähige Oligo- oder Polymere, leitfähige Oxide und mit leitfähigen Füllstoffen gefüllten Polymeren oder Kombinationen daraus.

Vorzugsweise werden als Elektrodenmaterial Mischoxide wie zum Beispiel Indium-Zinn-Oxide (ITO) eingesetzt. Bei Verwendung solcher Mischoxide lassen sich die Elektroden in vorteilhafter Weise teildurchlässig oder transparent gestalten.

Als leitfähige Oligo- oder Polymere können beispielsweise Polythiophene, Polyaniline oder Polypyrrole eingesetzt werden. Als Füllstoffe für mit leitfähigen Füllstoffen gefüllte Polymere können beispielsweise Metalle, leitfähige Kohlenstoff basierte Materialien, wie Ruß, Kohlenstoff-Nanoröhrchen (carbon nanotubes, CNT) oder leitfähige Oligo- oder Polymere eingesetzt werden. Der Füllstoffgehalt der Polymere liegt dabei vorzugsweise oberhalb der Perkolationsschwelle, so dass die leitfähigen Füllstoffe durchgehend elektrisch leitfähige Pfade innerhalb der mit leitfähigen Füllstoffen gefüllten Polymere ausbilden.

In einer weiteren Ausführungsform des erfindungsgemäßen Interferometers verläuft der durch das optische Element verlaufende Teilstrahl durch das dielektrische Elastomer und nicht durch die Elektroden. So kann beispielsweise das optische Element so angeordnet sein dass die Elektroden parallel zum Teilstrahl angeordnet sind. In dieser Konfiguration kann die Längenexpansion des dielektrischen Elastomers beim Anlegen einer elektrischen Spannung zur Beeinflussung der optischen Weglänge eingesetzt werden.

In einer weiteren Ausführungsform des erfindungsgemäßen Interferometers verläuft der durch das optische Element verlaufende Teilstrahl durch das dielektrische Elastomer und durch die Elektroden. In dieser Konfiguration kann die Längenkontraktion des dielektrischen Elastomers beim Anlegen einer elektrischen Spannung zur Beeinflussung der optischen Weglänge eingesetzt werden. Zweckmäßigerweise sind die Elektroden für den durch sie hindurchtretenden Teilstrahl möglichst transparent. Ist dieses nicht möglich oder gewünscht, können innerhalb der Elektroden Aussparungen vorgesehen sein, durch die der Teilstrahl in das Elastomer ein- und wieder hinaustreten kann.

Ein weiterer Gegenstand der vorliegenden Erfindung ist ein Verfahren zum Betreiben eines Interferometers, umfassend die Schritte:
Bereitstellen eines erfindungsgemäßen Interferometers;
Einstrahlen eines Teilstrahls durch das optische Element des Interferometers; und
Anlegen einer elektrischen Spannung an das dielektrische Elastomer mittels der Elektroden, wobei die elektrische Spannung ausreichend ist, um eine Veränderung der Schichtdicke und/oder des Brechungsindexes des dielektrischen Elastomers zu bewirken.

Vorzugsweise ist der hierbei betrachtete Brechungsindex n_{D} derjenige des Elastomers bei einer Wellenlänge von 589 nm.

Der durch das optische Element eingestrahlte Teilstrahl wird, wie bereits zum erfindungsgemäßen Interferometer ausgeführt, aus einem ersten Strahlteiler erhalten. Nach dem Passieren des optischen Elements wird dieser Teilstrahl mit dem anderen Teilstrahl kombiniert.

Der Teilstrahl kann das optische Element des Interferometers sowohl dergestalt passieren, dass er nur durch das dielektrische Elastomer verläuft. Alternativ kann er auch durch die Elektroden oder durch Aussparungen in den Elektroden und durch das Elastomer verlaufen.

In einer Ausführungsform des erfindungsgemäßen Verfahrens ist die an das dielektrische Elastomer angelegte elektrische Spannung während des Betriebes des Interferometers zeitlich veränderlich. In dieser Betriebsweise kann ein optisches Signal hinsichtlich seiner Intensität moduliert werden.

In einer weiteren Ausführungsform des erfindungsgemäßen Verfahrens stellt die an das dielektrische Elastomer angelegte elektrische Spannung eine zu messende Größe in einem Mess-System dar. Die hierdurch bewirkte Phasenverschiebung des rekombinierten Lichtstrahls kann dann auf empfindliche Weise Auskunft über die angelegte Spannung geben. Mit anderen Worten fungiert das erfindungsgemäße Interferometer und speziell das optische Element in dieser Betriebsweise als Messwertaufnehmer.

In einer weiteren Ausführungsform des erfindungsgemäßen Verfahrens stellt die an das dielektrische Elastomer angelegte elektrische Spannung eine Stellgröße in einem Regelkreis dar. Auch in dieser Betriebsweise fungiert das Interferometer und speziell das optische Element als Messwertaufnehmer. Bei einer mechanischen Einwirkung von Außen ändert sich die Phasenverschiebung im rekombinierten Teilstrahl. Diese Phasenverschiebung wird als Abweichung von einem Sollzustand registriert. Durch Anlegen einer elektrischen Spannung an das dielektrische Elastomer kann diese Phasenverschiebung kompensiert werden. Auf diese Weise kann ein auf das Elastomer ausgeübter Druck gemessen werden.

Ein weiterer Gegenstand der vorliegenden Erfindung ist die Verwendung eines erfindungsgemäßen Interferometers als Intensitätsmodulator und/oder als Messwertaufnehmer. In einer bevorzugten Verwendung erfolgt die Verwendung als Intensitätsmodulator in einer Laseranordnung.

Die vorliegende Erfindung wird anhand der nachfolgenden Zeichnungen weiter erläutert, ohne jedoch darauf beschränkt zu sein. Es zeigen:
FIG. 1 den schematischen Aufbau eines Interferometers
FIG. 2 den schematischen Aufbau eines weiteren Interferometers

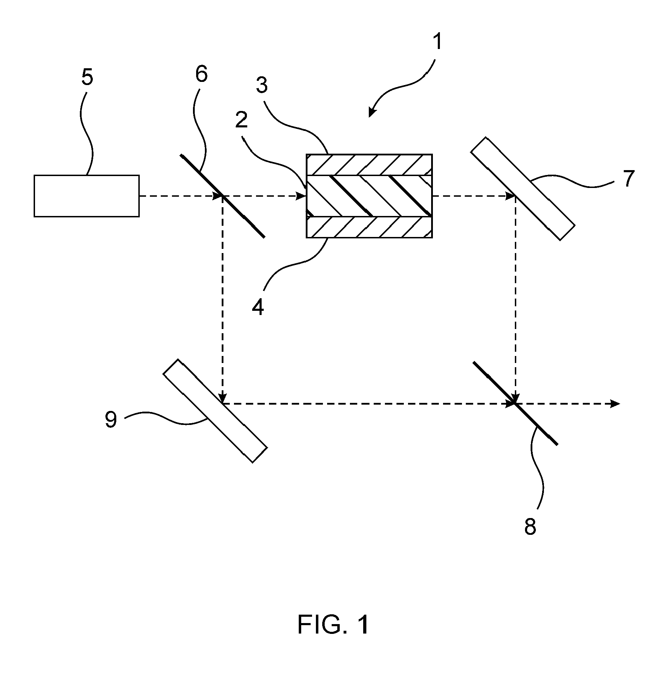

FIG. 1 zeigt den schematischen Aufbau eines Interferometers mit optischem Element 1, Lichtquelle 5, Strahlteilern 6 und 8 sowie Spiegeln 7 und 9. Die Lichtquelle 5, beispielsweise ein Laser, sendet einen Lichtstrahl aus, der zunächst auf den ersten Strahlteiler 6 trifft. Dieser Strahlteiler kann ein teildurchlässiger Spiegel sein. Ein Teil des Lichtstrahls trifft auf den Spiegel 9, von wo aus er zum zweiten Strahlteiler 8 reflektiert wird. Auch der zweite Strahlteiler 8 kann ein teildurchlässiger Spiegel sein.

Derjenige Teilstrahl, der nicht vom ersten Strahlteiler 6 reflektiert wird, tritt durch das optische Element 1 hindurch. In dem in FIG. 1 gezeigten Fall verläuft der Teilstrahl nur durch das dielektrische Elastomer 2 des optischen Elements 1 und nicht durch die Elektroden 3, 4. Auf diese Weise müssen die Elektroden 3, 4 nicht transparent für den Teilstrahl sein. Nach dem Austreten aus dem Elastomer 2 wird dieser Teilstrahl vom Spiegel 7 zum zweiten Strahlteiler 9 reflektiert. An diesem zweiten Strahlteiler 9 findet eine Überlagerung der beiden Teilstrahlen statt, so dass ein resultierender Lichtstrahl erhalten wird.

Durch anlegen einer elektrischen Spannung an das dielektrische Elastomer 2 mittels der Elektroden 3, 4 kommt es zu einer Kontraktion des Elastomers 2 zwischen den Elektroden 3, 4 und somit zu einer Vergrößerung des innerhalb des Elastomers 2 durch den Teilstrahl zurückgelegten Weges. Abhängig vom Material kann es auch noch zu einer Änderung der Brechzahl des Elastomers 2 kommen. Insgesamt ändert sich die optische Weglänge dieses Teilstrahls. Dann können bei der Überlagerung der beiden Teilstrahlen Interferenzmuster beobachtet werden.

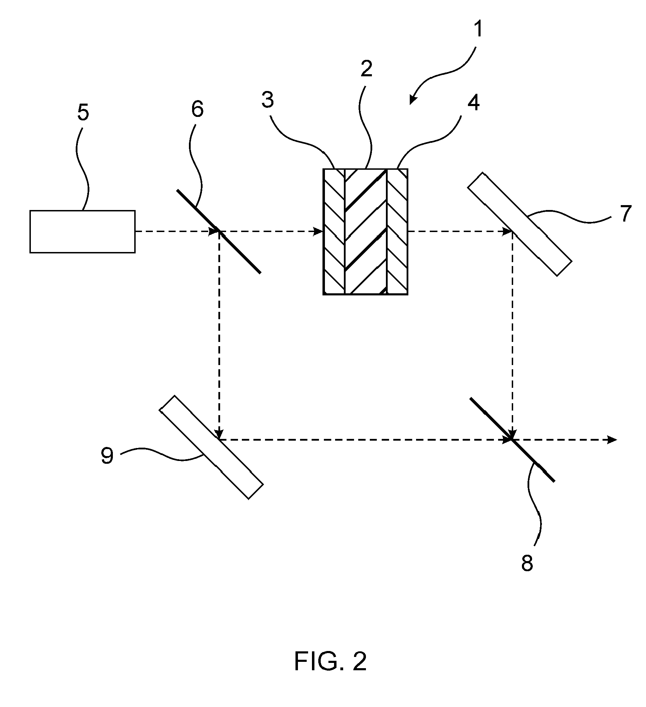

In FIG. 2 ist ein zu FIG. 1 korrespondierender Aufbau eines Interferometers gezeigt. Als einziger Unterschied ist das optische Element 1 nun so angeordnet, dass der vom ersten Stahlteiler 6 nicht reflektierte Teilstrahl durch die Elektroden 3, 4 und das Elastomer 2 hindurch verläuft. Auf diese Weise kommt es beim Anlegen einer elektrischen Spannung an das Elastomer 2 zu einer Verkürzung des innerhalb des Elastomers 2 durch den Teilstrahl zurückgelegten Weges.

Zweckmäßigerweise sind die Elektroden 3, 4 für den durch sie hindurchtretenden Teilstrahl möglichst transparent. Ist dieses nicht möglich oder gewünscht, können innerhalb der Elektroden 3, 4 Aussparungen vorgesehen sein, durch die der Teilstrahl in das Elastomer 2 ein- und wieder hinaustreten kann.

## Patentansprüche

1. Interferometer, wobei ein aus einer geeigneten Quelle (5) stammender elektromagnetischer Strahl mittels eines ersten Strahlteilers (6) in wenigstens zwei Teilstrahlen aufgeteilt wird und die erhaltenen Teilstrahlen auf getrennten Wegen zu einem zweiten Strahlteiler (7) geführt werden, an welchem sie wieder vereint werden,
**dadurch gekennzeichnet, dass**
in den Strahlengang wenigstens eines Teilstrahles ein optisches Element (1) eingebracht ist, durch welches der Teilstrahl läuft,
wobei das optische Element (1) wenigstens ein dielektrisches Elastomer (2) sowie zwei an gegenüberliegenden Seiten des dielektrischen Elastomeren (2) angeordnete Elektroden (3, 4) umfasst und
wobei die optische Weglänge des durch das optische Element (1) verlaufenden Teilstrahles durch Anlegen einer elektrischen Spannung an die Elektroden (3, 4) veränderbar ist.

2. Interferometer nach Anspruch 1,
**dadurch gekennzeichnet, dass**
das Interferometer ein Mach-Zehnder-Interferometer ist.

3. Interferometer nach Anspruch 1 oder 2,
**dadurch gekennzeichnet, dass**
das Elastomer (2) ausgewählt ist aus der Gruppe umfassend Polyurethan-Elastomere, Silikon-Elastomere und/oder Acrylat-Elastomere.

4. Interferometer nach einem der Ansprüche 1 bis 3,
**dadurch gekennzeichnet, dass**
das Material der Elektroden (3, 4) ausgewählt ist aus der Gruppe umfassend Metalle, Metalllegierungen, leitfähige Oligo- oder Polymere, leitfähige Oxide und mit leitfähigen Füllstoffen gefüllten Polymeren oder Kombinationen daraus.

5. Interferometer nach einem der Ansprüche 1 bis 4,
**dadurch gekennzeichnet, dass**
der durch das optische Element (1) verlaufende Teilstrahl durch das dielektrische Elastomer (2) und nicht durch die Elektroden (3, 4) verläuft.

6. Interferometer nach einem der Ansprüche 1 bis 5,
**dadurch gekennzeichnet, dass**
der durch das optische Element (1) verlaufende Teilstrahl durch das dielektrische Elastomer (2) und durch die Elektroden (3, 4) verläuft.

7. Verfahren zum Betreiben eines Interferometers, umfassend die Schritte:
Bereitstellen eines Interferometers nach einem der Ansprüche 1 bis 6;
Einstrahlen eines Teilstrahls durch das optische Element (1) des Interferometers; und
Anlegen einer elektrischen Spannung an das dielektrische Elastomer (2) mittels der Elektroden (3, 4), wobei die elektrische Spannung ausreichend ist, um eine Veränderung der Schichtdicke und/oder des Brechungsindexes des dielektrischen Elastomers (2) zu bewirken.

8. Verfahren nach Anspruch 7,
**dadurch gekennzeichnet, dass**
die an das dielektrische Elastomer (2) angelegte elektrische Spannung während des Betriebes des Interferometers zeitlich veränderlich ist.

9. Verfahren nach Anspruch 7 oder 8, wobei die an das dielektrische Elastomer (2) angelegte elektrische Spannung eine zu messende Größe in einem Mess-System darstellt.

10. Verfahren nach einem der Ansprüche 7 bis 9,
**dadurch gekennzeichnet, dass**
die an das dielektrische Elastomer (2) angelegte elektrische Spannung eine Stellgröße in einem Regelkreis darstellt.

11. Verwendung eines Interferometers nach einem der Ansprüche 1 bis 6 als Intensitätsmodulator und/oder als Messwertaufnehmer.
